(19) Europäisches Patentamt
European Patent Office
Office européen des brevets

(11) **EP 2 380 008 B1**

(12) **EUROPÄISCHE PATENTSCHRIFT**

(45) Veröffentlichungstag und Bekanntmachung des Hinweises auf die Patenterteilung:
**25.11.2015 Patentblatt 2015/48**

(21) Anmeldenummer: **10700499.6**

(22) Anmeldetag: **14.01.2010**

(51) Int Cl.:
*G01N 21/64* (2006.01)     *G06T 7/00* (2006.01)

(86) Internationale Anmeldenummer:
**PCT/EP2010/000156**

(87) Internationale Veröffentlichungsnummer:
**WO 2010/081690 (22.07.2010 Gazette 2010/29)**

(54) **VERFAHREN UND SYSTEM ZUR CHARAKTERISIERUNG EINER PROBE MITTELS BILDGEBENDER FLUORESZENZMIKROSKOPIE**

METHOD AND SYSTEM FOR CHARACTERIZING A SAMPLE BY MEANS OF IMAGING FLUORESCENCE MICROSCOPY

PROCÉDÉ ET SYSTÈME DE CARACTÉRISATION D'UN ÉCHANTILLON PAR MICROSCOPIE À FLUORESCENCE POUR IMAGERIE

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **19.01.2009 DE 102009005953**

(43) Veröffentlichungstag der Anmeldung:
**26.10.2011 Patentblatt 2011/43**

(73) Patentinhaber: **Berthold Technologies GmbH & Co. KG**
**75323 Bad Wildbad (DE)**

(72) Erfinder:
• **MEIXNER, Alfred**
**72411 Bodelshausen (DE)**
• **SCHLEIFENBAUM, Frank**
**72076 Tübingen (DE)**

(74) Vertreter: **Patentanwälte**
**Ruff, Wilhelm, Beier, Dauster & Partner mbB**
**Kronenstraße 30**
**70174 Stuttgart (DE)**

(56) Entgegenhaltungen:
WO-A1-2006/069444    DE-A1- 10 145 823
US-B2- 6 794 659

• BEDNARKIEWICZ A ET AL: "Global analysis of microscopic fluorescence lifetime images using spectral segmentation and a digital micromirror spatial illuminator" JOURNAL OF BIOMEDICAL OPTICS SPIE - THE INTERNATIONAL SOCIETY FOR OPTICAL ENGINEERING USA, Bd. 13, Nr. 4, Juli 2008 (2008-07), Seiten 041316-1-041316-13, XP002572277 ISSN: 1083-3668
• LAPTENOK ET AL.: "Fluorescence Image Microscopy (FLIM) Data Analysis with TIMP" JOURNAL OF STATISTICAL SOFTWARE, [Online] Bd. 18, Nr. 8, Januar 2007 (2007-01), Seiten 1-20, XP002572278 Gefunden im Internet: URL:http://www.jstatsoft.org/v18/i08>
• ELSON D S ET AL: "Miniaturized side-viewing imaging probe for fluorescence lifetime imaging (FLIM): validation with fluorescence dyes, tissue structural proteins and tissue specimens" NEW JOURNAL OF PHYSICS, Bd. 9, Nr. 5, 1. Mai 2007 (2007-05-01), Seiten 127-127, XP020122706 INSTITUTE OF PHYSICS PUBLISHING, BRISTOL, GB ISSN: 1367-2630
• SCHWEITZER D ET AL: "In vivo autofluorescence lifetime imaging at the fundus of the human eye" PROCEEDINGS OF THE SPIE - THE INTERNATIONAL SOCIETY FOR OPTICAL ENGINEERING SPIE - THE INTERNATIONAL SOCIETY FOR OPTICAL ENGINEERING USA, Bd. 6138, Nr. 1, 9. Februar 2006 (2006-02-09), Seiten 613808-1-613808-10, XP040219971 ISSN: 0277-786X

EP 2 380 008 B1

- **SCHLEIFENBAUM ET AL.: "Fluorescence Intensity Decay Shape Analysis Microscopy (FIDSAM) for Quantitative and Sensitive Live-Cell Imaging: A Novel Technique for Fluorescence Microscopy of Endogenously Expressed Fusion-Proteins" MOLECULAR PLANT ADVANCE ACCESS, 28. Dezember 2009 (2009-12-28), Seiten 1-8, XP8120195 DOI: 10.1093/mp/ssp110**

**Beschreibung**

HINTERGRUND DER ERFINDUNG

Gebiet der Erfindung

Die Erfindung bezieht sich auf ein Verfahren und ein System zur Charakterisierung einer Probe mittels bildgebender Fluoreszenzmikroskopie. Anwendungsmöglichkeiten bestehen insbesondere im Bereich der Charakterisierung biologischer Proben. Hier haben sich fluoreszenzmikroskopische Methoden aufgrund ihrer hohen Empfindlichkeit und Selektivität inzwischen etabliert.

Beschreibung des verwandten Standes der Technik

Die Fluoreszenzmikroskopie beruht auf der Tatsache, dass geeignete Moleküle einen Teil der von ihnen absorbierten elektromagnetischen Strahlung in Form einer langwelligeren (energieärmeren) Strahlung wieder abgeben. Es gibt eine Anzahl sogenannter Fluorochrome (Fluoreszenzfarbstoffe), mit denen mikroskopische Präparate markiert (fluorochromiert) werden können und die dadurch zu einem indirekten (oder sekundären) Fluoreszieren gebracht werden können. In den zurückliegenden Jahrzehnten wurden zahlreiche Vitalfarbstoffe gefunden oder entwickelt, die - in geringen Konzentrationen angewandt - bestimmte Teile einer Zelle markieren können, ohne sie zum Absterben zu bringen. Dadurch wurde es z.B. möglich, den Stofftransport in Zellen und Geweben zu verfolgen oder den pH-Wert bestimmter Kompartimente zu ermitteln.

Bei der bildgebenden Fluoreszenzmikroskopie, wie sie in weiten Bereichen der biologischen und medizinischen Forschung und Entwicklung Anwendung findet, werden sowohl an die räumliche als auch an die dynamische Auflösung der verwendeten Verfahren und Systeme immer höhere Anforderungen gestellt. Während die räumliche Auflösung durch Ausnutzung nicht-linearer optischer Eigenschaften optimiert werden kann, ist die dynamische Auflösung, d.h. der Kontrast zwischen dem durch eine Fluoreszenzmarkierung erzeugten Nutzsignal und unerwünschten Hintergrundsignalen der Umgebung, oftmals ein limitierender Faktor für aussagekräftige und verwertbare Untersuchungen. Eine wesentliche Ursache für das häufig sehr schlechte Signal-RauschVerhältnis ist die sogenannte Autofluoreszenz insbesondere von biologisch relevanten Materialien, wie beispielsweise lebenden Zellen, die zu starken Hintergrundsignalen führen kann. Erschwerend kommt hinzu, dass die auf Autofluoreszenz zurückgehenden Signalanteile häufig spektral, d.h. bezüglich ihrer Wellenlänge, mit den gängigen Fluoreszenzfarbstoffen überlagern. Daher ist eine einfache spektrale Diskriminierung durch den Einsatz von Farbfiltern in vielen Fällen nicht möglich oder bringt nur unzureichende Ergebnisse.

Als Alternative zu bildgebenden Verfahren auf Basis der Messung der reinen Fluoreszenzintensität wurden mittlerweile bildgebende Verfahren entwickelt, die auf der Bestimmung der Fluoreszenzlebensdauer basieren. Die sogenannte Fluoreszenzlebensdauer-Mikroskopie (Fluorescence Lifetime Imaging Microscopy, FLIM) ist inzwischen weit entwickelt und in einigen kommerziell erhältlichen Fluoreszenzmikroskopen als Option nutzbar. Bei einer häufig eingesetzten Variante der Fluoreszenzlebensdauer-Mikroskopie wird eine fluoreszierende Probe mit einem kurzen Laserpuls angeregt und es wird die Zeit gemessen, bis ein Fluoreszenzphoton durch einen Detektor registriert wird. Diese Messung wird mehrfach wiederholt, um eine Intensitätszerfallstatistik zu erhalten, die im einfachsten Fall eine exponentielle Abnahme der Fluoreszenzintensität nach Abschalten der Anregungsstrahlung beschreibt. An die gemessenen Daten wird dann eine monoexponentielle oder multiexponentielle Funktion angepasst, die im monoexponentiellen Fall beispiels-weise durch:

$$I(t) = I_0 \exp\left(\frac{-t}{\tau}\right) \tag{1}$$

beschrieben werden kann. Hierbei ist I(t) die von der Zeit t abhängige Fluoreszenzintensität, die ausgehend von einer Anfangsintensität $I_0$ zeitlich abklingt. Das zeitliche Abklingen wird durch die Zerfallskonstante $\tau$ definiert, die denjenigen Zeitpunkt beschreibt, an dem die Anfangsintensität $I_0$ auf den Wert 1/e abgefallen ist. Dieser Wert (1/e) beschreibt die mittlere Zeit, die ein Molekül im elektronisch angeregten Zustand verweilt, bis es ein Photon aussendet.

Bei den klassischen FLIM-Techniken wird in der Regel ein Falschfarbenbild der Probenoberfläche erzeugt, indem der Fluoreszenzzerfall an jedem Bildpunkt aufgezeichnet und für jeden Bildpunkt die Fluoreszenzlebensdauer bestimmt wird. Als Ergebnis kann beispielsweise ein Bild erzeugt werden, welches jedem Bildpunkt eine individuelle Zeitkonstante bzw. Lebensdauer zuweist. Auf diese Weise lassen sich u.a. Proteininteraktionen oder intrazelluläre Abstandsänderungen bestimmen oder zumindest abschätzen (siehe z.B. Fachartikel: "Fluorescence Correlation Specroscopy and Fluorescence Lifetime Imaging Microscopy", von Breusegem, S., M. Levi, und M. Barry, in: Review.

Nephron Exp Nephrol. (2006) 103 (2): Seite e41 - e49). Andere Beispiele werden im Fachartikel "Fluorescence Lifetime Imaging (FLIM) zur Analyse der lokalen Lipid-Umgebung" von A. Bülter, B. Krämer, F. Koberling, A. Tannert, T. Korte und A. Hermann in: BIOspektrum 3/05 (11. Jahrgang) Seiten 351 bis 353 angegeben. Für eine ausführlichere Beschreibung der Methodik der Fluoreszenzlebensdauer-Mikroskopie wird auf einschlägige Fachbücher verwiesen.

Die WO 2006/069444 A1 beschreibt ein Verfahren zur Verbesserung von Fluoreszenzbildern von Objekten, wie z.B. biologischem Gewebe, durch selektives Eleminieren oder Reduzieren unerwünschter Fluoreszenz von Fluorophoren, welche nicht dem interessierenden Fluorophor entsprechen. Das Verfahren basiert auf der Messung der Fluoreszenzlebenszeit und erhält die Information, die sich auf die Fluoreszenzintensität des interessierenden Fluorophors bezieht. Dadurch soll eine Verbesserung des Kontrasts bei Fluoreszenzbildern erreicht werden.

Der Fachartikel "Global analysis of microscopic fluorescence lifetime images using spectral segmentation and a digital micromirror spatial illuminator" von A. Bednarkiewicz und M. P. Whelan in: Journal of Biomedical Optics 13(4) Juli/August 2008, 041316-1 bis 041316-13 beschreibt einen neuen Ansatz zur Erfassung, Analyse und Rekonstruktion mikroskopischer Fluoreszenzlebenszeit-Bilder (fluorescence lifetime imaging (FLIM) images) durch Verwendung einer digitalen Mikrospiegelaneinrichtung (digital micromirror device DMD) zur räumlichen Beleuchtung. In einem ersten Schritt wird das gesamte Fluoreszenzbild mithilfe einer CCD-Kamera erfasst. Weitere qualitative Spektralanalyse und Aufteilung werden durchgeführt, um eine räumliche Unterscheidung zwischen spektral unterschiedlichen Regionen der Probe zu erreichen. Danach wird die Probe segmentweise angeregt und die Fluoreszenzlebenszeiten werden mit einer Photonenzählungstechnik erfasst. Die Rekonstruktion eines FLIM-Bildes wird entweder durch Scannen der Probe oder durch direkte Erfassung spezifischer interessierender Regionen erreicht. Die Beleuchtung mittels einer digitalen Mikrospiegeleinrichtung erlaubt die schnelle Online-Messung globaler anfänglicher Parameter, die einer ersten Iteration eines Fitting-Algorithmus zugeführt werden. Als Konsequenz wird eine Verringerung der Rechenzeit erreicht, die erforderlich ist, um eine ausreichende Fitqualität zu erreichen, ohne bei der Genauigkeit und Präzision der Lebenszeitmessungen Kompromisse zu machen.

Der Fachartikel "Fluoresence Lifetime Imaging Microscopy (FLIM) Data Analysis with TIMP" von S. Laptenok et al. im "Journal of Statistical Software" Volume 18, Ausgabe 8, Januar 2007, Seiten 1 bis 20 beschreibt ein Verfahren zur Charakterisierung einer Probe mittels bildgebender Fluoreszenzlebenszeit-Mikroskopie (FLIM), bei welchem die Fluoreszenzintensität nach Abschalten einer Anregungsstrahlung zeitaufgelöst erfasst wird, um eine das zeitliche Abklingen der Fluoreszenzintensität repräsentierende Abklingfunktion für eine Vielzahl von Bildpunkten zu ermitteln. Die den Bildpunkten zugeordneten Abklingfunktionen werden mit mindestens einer Referenz-Abklingfunktion verglichen, wodurch Residuen ermittelt werden, die analysiert werden. Ein Plot stellt einen "first right singular vector" dar, welcher mit einer "singular value decomposition (SVD)" der Residuen assoziiert ist, wobei diese auf die für die Analyse ausgewählten Pixel abgebildet werden. Dieser Plot stellt Informationen zur Qualität der Anpassung pro Pixel dar und ermöglicht eine Bestimmung, ob Mängel bei der Anpassung räumlich strukturiert sind.

Der Fachartikel "Miniaturized side-viewing imaging probe for fluorescence lifetime imaging (FLIM): validation with fluorescence dyes, tissue structural proteins and tissue specimens" von D. S. Elson et al. in: New Journal of Physics 9 (2007) 127, Seiten 1 bis 11 beschreibt ein Verfahren zur Charakterisierung einer Probe mittels bildgebender Fluoreszenzlebensdauerabbildung (FLIM), bei dem die Fluoreszenzintensität nach Abschalten einer Anregungsstrahlung zeitauflösend erfasst wird, um für eine Vielzahl von Bildpunkten eine Abklingfunktion zu ermitteln, die das zeitliche Abklingen der Fluoreszenzintensität repräsentiert. Die den Bildpunkten zugeordneten Abklingfunktionen werden unter Verwendung der Laguerre-Polynomendekonvolutions-Technik analysiert, um Fluoreszenzlebensdauern, integrierte Intensitäten und Laguerre-Koeffizienten zu berechnen. Mit dem Verfahren können repräsentative Fluoreszenzlebenszeitkarten für Proben ermittelt werden. Eine Darstellung zeigt einen Plot eines normalisierten mittleren Fehlerquadrats (normalized mean square error (NMSE)) für jedes Pixel.

Trotz der prinzipiell großen Leistungsfähigkeit der Fluoreszenzlebensdauer-Mikroskopie zur Analyse auch kleinster Probenvolumina können Interpretationsfehler der erzeugten Bilder häufig nicht ausgeschlossen werden, da die Fluoreszenzlebensdauer eines Emitters von vielen Faktoren abhängig ist, die häufig unbekannt sind oder nur abgeschätzt werden können.

ZUSAMMENFASSUNG DER ERFINDUNG

Vor diesem Hintergrund ist es eine Aufgabe der Erfindung, ein Verfahren und ein System zur Charakterisierung einer Probe mittels bildgebender Fluoreszenzmikroskopie bereit zu stellen, welches die Möglichkeiten kommerzieller Verfahren und Systeme zur hochauflösenden Analyse erweitert. Insbesondere sollen Verbesserungen bei der Charakterisierung biologischer Proben mit starkem Hintergrundsignal erzielt werde, z.B. durch Verbesserung des optischen Kontrastes.

Zur Lösung dieser Aufgaben stellt der Erfindung ein Verfahren mit den Merkmalen von Anspruch 1 bereit. Weiterhin wird ein System mit den Merkmalen von Anspruch 7 bereitgestellt. Vorteilhafte Weiterbildungen sind in den abhängigen Ansprüchen angegeben. Der Wortlaut sämtlicher Ansprüche wird durch Bezugnahme zum Inhalt der Beschreibung gemacht.

Bei dem Verfahren wird, ähnlich wie bei herkömmlichen Verfahren mit Fluoreszenzlebenszeit-Bestimmung, die Fluoreszenzintensität nach Abschalten einer Anregungsstrahlung zeitaufgelöst erfasst, um für eine Vielzahl von Bildpunkten jeweils eine Abklingfunktion zu ermitteln, die das zeitliche Abklingen der Fluoreszenzintensität, also den Fluoreszenzzerfall, repräsentiert. In einem weiteren Verfahrensschritt werden die den Bildpunkten zugeordneten Abklingfunktionen mit mindestens einer Referenz-Abklingfunktion verglichen, um für jeden der Bildpunkte einen zugeordneten Fehlerwert zu bestimmen. Der einem Bildpunkt zugeordnete Fehlerwert ist dabei ein Maß für eine Abweichung der dem Bildpunkt zugeordneten Abklingfunktion von der Referenz-Abklingfunktion. Durch den Vergleichsschritt zwischen der den jeweiligen Bildpunkten zugeordneten Abklingfunktionen und mindestens einer Referenz-Abklingfunktion wird somit eine Zerfallsformanalyse durchgeführt, um für den jeweiligen Bildpunkt eine Ähnlichkeit bzw. Unähnlichkeit des lokalen Fluoreszenzzerfalls mit einem Referenzzerfall (repräsentiert durch die Referenz-Abklingfunktion) zu erhalten. Die ermittelten Fehlerwerte werden dann zur Erzeugung eines Bildes der Probe verwendet. Dies bedeutet insbesondere, dass die Fehlerwerte ortsauflösend, d.h. für unterschiedliche Bildpunkt bzw. Gruppen von Bildpunkten gesondert, für die Bilderzeugung genutzt werden.

Bei der beanspruchten Erfindung wird ein Bild der Probe unter Verwendung der Fehlerwertes dadurch erzeugt, dass die für jeden Bildpunkt ermittelten Werte für die Fluoreszenzintensität mit dem Reziprokwert des ermittelten Fehlerwertes, beispielsweise mit dem Reziprokwert des Fehlerquadrats $\chi^2$, oder mit einem hierzu proportionalen Wert, multipliziert werden. Auf diese Weise wird ein Hintergrundsignal, welches einem hohen Fehlerwert entspricht, weniger gewichtet, während Nutzsignale, die entsprechend kleineren Werten des Fehlerwertes entsprechen, überhöht werden. Andere Möglichkeiten der Gewichtung der Fluoreszenzintensitätssignale mit Hilfe der Fehlerparameter sind ebenfalls möglich.

Der Begriff "Bildpunkt" bezeichnet hier eine experimentelle Größe, die sich aus den Anforderungen der jeweiligen Anwendung ergibt. Die minimale Größe eines Bildpunktes kann z.B. aus der mit dem optischen System erzielbaren räumlichen Auflösung d bei beugungsbegrenzter Abbildung gemäß d = $\lambda$/(2*NA) abgeleitet sein und somit z.B. etwa der Hälfte der verwendeten Wellenlänge (i.e. $\lambda$/2) entsprechen. Die Größe eines Bildpunktes kann bei Anwendung geeigneter Superresolutionsverfahren, z.B. sub-diffraction-limit imaging by stochastic optical reconstruction microscopy (STORM) auch geringer sein, z.B. bis hinunter zu ca. $\lambda$/20. Wenn eine geringere räumliche Auflösung ausreicht, kann ein Bildpunkt auch wesentlich größer sein und z.B. einem Bereich mit einer mittleren Größe entsprechen, die etwa der verwendeten mittleren Wellenlänge oder einem Vielfachen davon entspricht.

Ein Bildpunkt kann in verschiedenen Richtungen die gleiche Ausdehnung haben und beispielsweise eine quadratische Form aufweisen. Er kann aber auch in einer ersten Richtung größer sein als in einer quer dazu verlaufenden zweiten Richtung. Beispielsweise können Bildpunkte eine rechteckige Form mit unterschiedlicher Länge und Breite haben. Die Ausdehnung eines Bildpunktes in einer bestimmten Richtung kann der in dieser Richtung gewünschten Auflösung angepasst sein. Bildpunkte können z.B. in der Richtung mit gewünschter hoher Ortsauflösung schmaler sein als in einer dazu senkrechten Richtung, in der nur geringere Ortsauflösung benötigt wird.

Die Bildpunkte für die Ermittlung des Fehlerwertes müssen nicht zwingend mit den Bildpunkten zur Ermittlung des Fluoreszenzintensitätssignals übereinstimmen. Die Größe der Bildpunkte für die Ermittlung der Abklingfunktion wird vorzugsweise so gewählt, dass sich eine hinreichend gute Zerfallsstatistik ergibt, die einen aussagekräftigen Vergleich mit einer Referenz-Abklingfunktion zulässt. Sind beispielsweise die Absolutwerte der Fluoreszenzintensität in einem Probenbereich besonders gering, so kann die Ausdehnung der Bildpunkte für die Ermittlung des Fehlerwertes entsprechend größer gewählt werden als in Bereichen mit hohen Absolutwerten der Fluoreszenzintensität. Für die Bilderzeugung ist lediglich wichtig, dass jedem für die Bilderzeugung vorgesehenen Bildpunkt ein Fehlerwert zugeordnet ist. Es kann z.B. sein, dass zu jedem Bildpunkt einer Vielzahl benachbarter Bildpunkte ein anderer zugeordneter Fehlerwert gehört. Es ist auch möglich, dass zu einer Gruppe unmittelbar benachbarter Bildpunkte eines Bildes ein und derselbe Fehlerwert gehört, so dass mehreren unmittelbar benachbarten Bildpunkten der gleiche Fehlerwert zugeordnet ist.

Als Referenz-Abklingfunktion kann eine monoexponentielle Abklingfunktion gewählt werden, die sich beispielsweise dann ergeben würde, wenn nur eine einzige fluoreszierende Spezies in einer bestimmten Umgebung vorhanden wäre. Eine solche Situation ist mit einer einzigen Zeitkonstante $\tau$ hinreichend genau beschreibbar. Bei Verwendung eines einzigen Markerfarbstoffes können auf diese Weise Bereiche identifiziert werden, die einen relativ hohen Anteil an Markerfarbstoff haben, denn der Fluoreszenzzerfall in diesen Bereichen sollte nur geringfügig von dem monoexponentiellen Referenzzerfall abweichen und entsprechend kleine Fehlerwerte ergeben, während Bereiche mit kleinerem Anteil an Markerfarbstoff eher einen multiexponentiellen Fluoreszenzzerfall und entsprechend höhere Fehlerwerte zeigen werden.

Alternativ oder zusätzlich ist es auch möglich, als Referenz-Abklingfunktion eine multiexponentielle Abklingfunktion zu wählen. Hier können insbesondere biexponentielle Abklingfunktionen, d.h. Abklingfunktionen mit genau zwei unterschiedlichen Zeitkonstanten, vorteilhaft sein, da sie eine relativ zuverlässige Anpassung erlauben. Eine zuverlässige multiexponentielle Anpassung kann z.B. für sogenannte FRET-Systeme sinnvoll sein, was im Folgenden näher erläutert wird.

Ein besonderes Anwendungsgebiet von klassischen FLIM Methoden, insbesondere für biologische Fragestellungen, umfasst das FRET-(Fluorescence Resonance Energy Transfer) Imaging, das z. B. zur Verfolgung von Abstandsänderungen oder molekularen Interaktionen im Bereich weniger Nanometer eingesetzt wird. Hierbei wird strahlungslos Anregungsenergie von einem kurzwellig emittierenden Donor auf einen längerwellig absorbierenden (und emittierenden) Akzeptor übertragen. Die Effizienz dieses Übertrags ist hierbei unter anderem von der 6. Potenz des Abstands der beiden Chromophore abhängig. Während die Fluoreszenzlebensdauer des Akzeptors nicht vom Übertrag beeinflusst wird, hängt die Donorfluoreszenzlebensdauer direkt von der Übertragseffizienz ab. Eine Verfahrensvariante zeichnet nun zunächst die Fluoreszenzlebensdauer des Akzeptors durch direkte Anregung ortsaufgelöst auf. Hierbei erhält man ein FLIM-Bild der Akzeptorlebensdauer. Die so erhaltenen Werte können als festgesetzten Parameter verwendet werden, um ein FLIM-Bild aufzuzeichnen, das durch Anregung des Donors generiert wird (hierbei detektiert man gleichzeitig die Emission des Akzeptors und die des teilweise fluoreszenzgelöschten Donors). Durch die Kenntnis der ortsaufgelösten Akzeptorlebensdauer kann man nun eine biexponentielle Referenz-Abklingfunktion generieren, deren unbekannte Parameter die Lebensdauer und Intensitätsamplitude des Donorzerfalls darstellen. Trägt hierbei eine starke Autofluoreszenz zum gemessenen Signal bei, ergeben sich zusätzliche Zerfallskonstanten, der gemessene Zerfall weicht von der Referenzfunktion ab. Somit kann auch für komplexe gekoppelte multichromophore Systeme das Verfahren Anwendung finden.

Es ist möglich, aus einer Korrelation mehrerer Vergleiche weitere Informationen über die untersuchte Probe abzuleiten, wobei z.B. bei manchen Ausführungsformen sowohl mit einer monoexponentiellen als auch mit einer multiexponentielle Referenz-Abklingfunktion verglichen wird.

Bei manchen nicht zur beanspruchten Erfindung gehörenden Beispielen werden die für die einzelnen Bildpunkte ermittelten Fehlerwerte direkt in ein Falschfarbenbild oder eine andere zweidimensionale oder dreidimensionale Repräsentation der untersuchten Probenbereiches umgerechnet, um für den analysierten Probenbereich ortsauflösend die jeweiligen Fehlerwerte bzw. die für die einzelnen Probenvolumina ermittelten Abweichungen von der Referenz-Abklingfunktion sichtbar zu machen. Eine ortsauflösende Analyse der Fehlerwerte in einem Fehlerwertbild kann unmittelbar zur Charakterisierung von Proben, insbesondere von biologischen Proben, herangezogen werden.

Durch die Analyse der Zerfallsform kann beispielsweise das Verhältnis von Nutzsignal zu Hintergrundsignal direkt experimentell zugänglich gemacht und visualisiert werden. Hierdurch kann z.B. die Verteilung einer Fluoreszenzmarkierung in einem Gewebe, in einer lebenden Zelle oder in einem anderen Probenmaterial verfolgt werden. Dadurch kann beispielsweise auch in nur schwach fluoreszenten Probenbereichen der Markeranteil, d.h. der Anteil des zum Markieren verwendeten Fluoreszenzfarbstoffs, bestimmt werden. Ist beispielsweise in einer Probenregion nur wenig Probenmaterial vorhanden, so ist die gemessene Fluoreszenzintensität gering, so dass in einem auf Fluoreszenzintensitäten basierenden Bild solche Bereiche entsprechend unauffällig, beispielsweise dunkel erscheinen würden. Trotzdem kann gegebenenfalls der relative Anteil der Fluoreszenzmarkierung in solchen Bereichen z.B. aufgrund von Agglomerationseffekten überdurchschnittlich hoch sein. Mit der vorgeschlagenen Verfahrensvariante werden solche Informationen über die Verteilung von Substanzen im Probenmaterial zugänglich. Eine Kenntnis des Verhältnisses von markiertem Probenmaterial zu nicht-markiertem Probenmaterial kann beispielsweise bei biologischen Proben dazu genutzt werden, intrazelluläre Transport- oder Speicherprozesse zu verfolgen. Eine solche Analyse, gegebenenfalls gepaart mit intensitätssensitiven Verfahren, kann in vielen Bereichen der Life Science nutzbringend angewendet werden, von grundlegenden Fragestellungen bis zu Wirkungsanalysen neuartiger Pharmazeutika.

Bei der beanspruchten Erfindung wird eine ortsauflösende Erfassung der Fluoreszenzintensität für eine Vielzahl von Bildpunkten zur Ermittlung von den Bildpunkten zugeordneten Fluoreszenzintensitätssignalen durchgeführt und die Fluoreszenzintensitätssignale werden mit dem zu dem Bildpunkt gehörenden Fehlerwerten gewichtet, um gewichtete Fluoreszenzintensitätssignale zu ermitteln. Dann werden unter Verwendung der gewichteten Fluoreszenzintensitätssignale ein oder mehrere Bilder der Probe erzeugt Durch diese Verfahrensvariante, die eine "Zerfallsformgewichtung" der Fluoreszenzintensitätssignale beinhaltet, ist eine erhebliche Steigerung des optischen Kontrastes in der bildgebenden Fluoreszenzmikroskopie möglich. Der Begriff "optischer Kontrast" bezeichnet hier das Intensitätsverhältnis zwischen dem Nutzsignal und dem (in der Regel unerwünschten) Hintergrundsignal. Eine solche Kontraststeigerung ist insbesondere im Bereich biologischer Proben von höchstem Interesse, da insbesondere diese Proben häufig sehr hohe Hintergrundsignalintensitäten aufweisen, die vor allem durch zelluläre Autofluoreszenz erzeugt werden. Die Gewichtung der Fluoreszenzintensitätssignale mit Hilfe der aus den Abklingfunktionen ermittelten Fehlerwerte kann zur Kontraststeuerung genutzt werden, da dadurch die Möglichkeit eröffnet ist, auf robuste Art ohne Vorannahmen das Hintergrundsignal zu unterdrücken, während gleichzeitig das Nutzsignal stärker gewichtet wird.

Bei einer Verfahrensvariante wird beim Vergleichen der den Bildpunkten zugeordneten Abklingfunktionen mit einer Referenz-Abklingfunktion für jeden Bildpunkt der Wert des Fehlerquadrats $\chi^2$ bestimmt, wodurch die Auswertung besonders schnell und einfach wird. Der Fehlerwert kann davon abgeleitet sein. Verfahren zur Bestimmung des Fehlerquadrates nach der Methode der kleinsten Fehlerquadrate (Least Squares Method) sind in vielen kommerziellen Systemen häufig bereits implementiert und können für diesen Zweck genutzt werden. Der Wert des Fehlerquadrats ist ein Maß für die Abweichung einer angepassten Funktion von experimentellen Werten und kann daher zur Bestimmung der Qualität der Anpassung genutzt werden. Je stärker ein gemessener Fluoreszenzzerfall von einem Referenzzerfall, z.B. einem monoexpontentiellen Verhalten, abweicht, desto größer wird der $\chi^2$ - Wert sein und desto mehr Hintergrundsignal wurde dementsprechend aufgezeichnet. Man hat also durch den Fehlerwert ein quantitatives Maß, um den Anteil von Nutzsignalen bzw. Hintergrundsignalen zu bestimmen. Andere Methoden zur Bestimmung der Abweichung zwischen der gemessenen Abklingfunktion und einer Referenz-Abklingfunktion sind ebenfalls möglich, beispielsweise eine Integration der Messkurve und der Referenzkurve und ein anschließender Vergleich der erhaltenen Werte.

Die Erfindung betrifft auch ein System mit den Merkmalen des Anspruchs 7.

Das System kann z.B. ein konfokales Mikroskopsystem umfassen, um kleinste Probenvolumina mit hoher Ortsauflösung untersuchen zu können und um ggf. auch Untersuchungen in unterschiedlichen Probentiefen durchführen zu können, die zur Erzeugung dreidimensionaler (räumlicher) Abbildungen des untersuchten Probenbereichs verarbeitet werden können.

Ausführungsformen der Erfindung können in Form zusätzlicher Programmteile oder Programmmodule in die Auswertesoftware bereits existierender Systeme zur Charakterisierung von Proben mittels bildgebender Fluoreszenzmikroskopie implementiert werden.

Daher betrifft ein weiterer Aspekt der vorliegenden Erfindung ein Computerprogrammprodukt, welches insbesondere auf einem computerlesbaren Medium gespeichert oder als Signal verwirklicht ist, wobei das Computerprogrammprodukt, wenn es in den Speicher eines geeigneten Computers geladen und von einem Computer ausgeführt ist bewirkt, dass der Computer ein Verfahren gemäß der Erfindung bzw. einer bevorzugten Ausführungsform hiervon durchführt.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte Ausführungen darstellen können.

KURZBESCHREIBUNG DER ZEICHNUNGEN

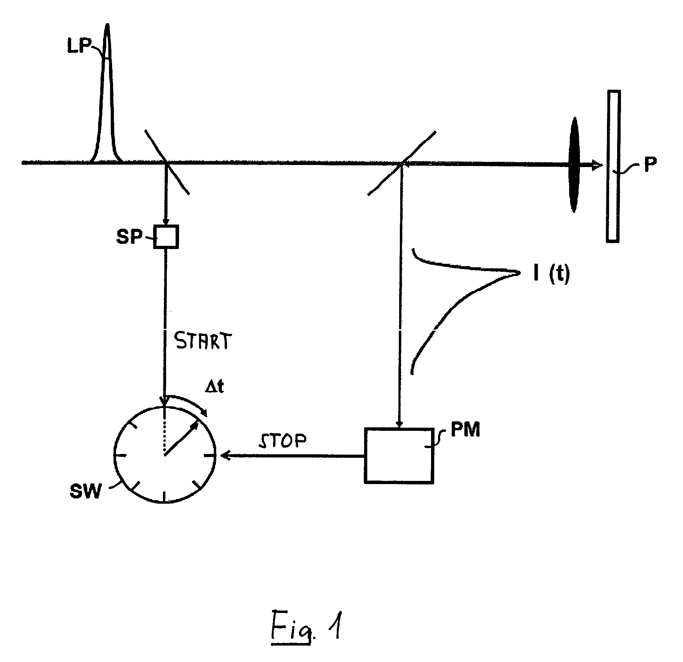

Fig. 1    zeigt eine schematische Darstellung wesentlicher Funktionseinheiten einer Einrichtung zur Fluoreszenzlebensdauerbestimmung durch Einzelphotonenzählstatistiken (Time-correlated single-photon counting, TCSPC);

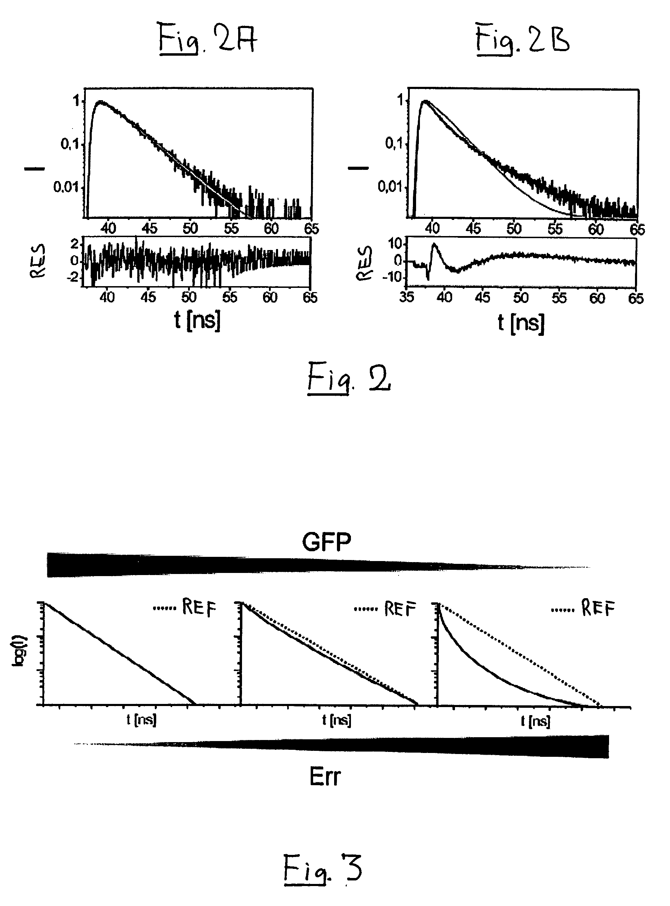

Fig. 2    zeigt in 2A und 2B zwei Fluoreszenzzerfall-Histogramme, in welchen die Anzahl einzelner Fluoreszenzphotonen aus einem Probenvolumen als Funktion der Zeit t nach Abschalten einer Anregungsstrahlung gemeinsam mit möglichen Referenz-Abklingfunktionen und Abweichungen davon dargestellt ist;

Fig. 3    zeigt schematisch drei unterschiedliche Fluoreszenzzerfallskurven für unterschiedliche Verhältnisse zwischen Nutzsignal und Hintergrundsignal, wobei der Anteil des Hintergrundsignals und damit der Wert des Fehlerwertes von links nach rechts zunimmt und der Anteil der fluoreszierenden Markersubstanz von links nach rechts abnimmt;

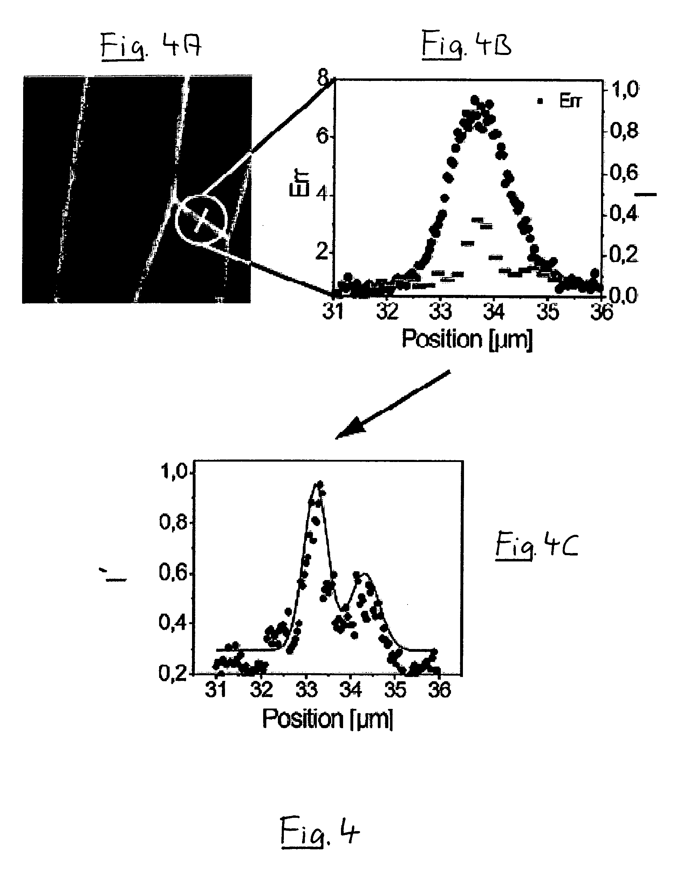

Fig. 4    zeigt in 4A ein Fluoreszenzintensitätsbild von mit GFP fluoreszenzmarkierten Zellmembranen von Arabidopsis-Zellen, in 4B ein Fluoreszenzintensitätsprofil entlang der weißen Linie in Fig. 4A (schwarze Punkte) sowie zugehörige Fehlerwerte (graue Balken), sowie in 4C das mit Hilfe der Zerfallsform gewichtete Intensitätsprofil aus Fig. 4B; und

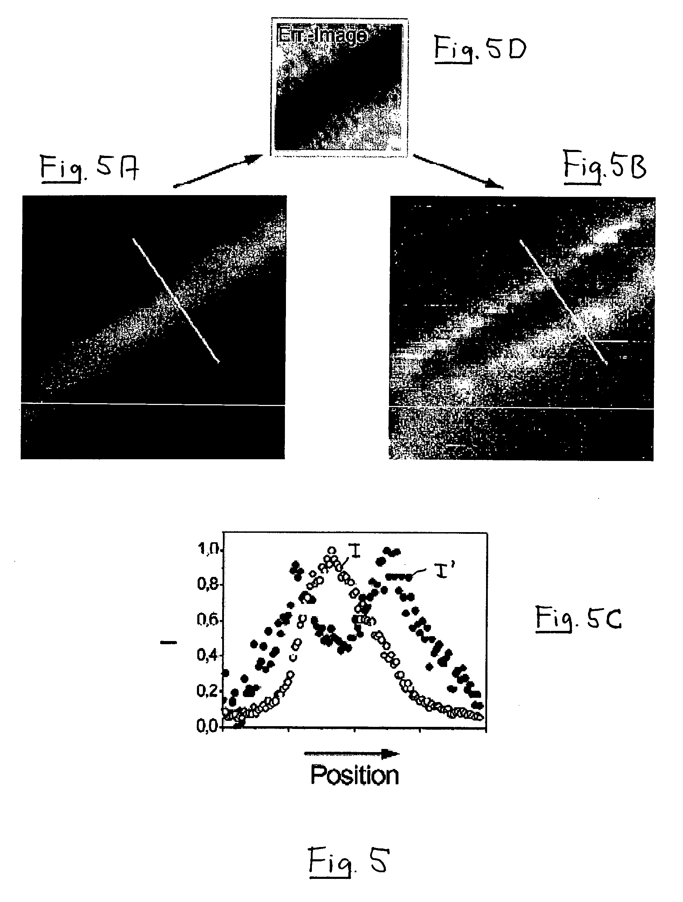

Fig. 5    zeigt in 5A und 5B Fluoreszenzintensitätsbilder von GFP markierten Zellmembranen getrennt durch eine Zellwand, wobei Fig. 5A ein Bild ohne kontraststeigernde Korrektur, Fig. 5B ein Bild mit kontraststeigernder Korrektur, Fig. 5C eine Vergleichsdarstellung von Fluoreszenzintensitätsprofilen der unkorrigierten Rohdaten (I) sowie der gewichteten Fluoreszenzintensitätssignale (I') und 5D ein Fehlerwertbild zeigt.

DETAILLIERTE BESCHREIBUNG DER BEVORZUGTEN AUSFÜHRUNGSFORMEN

Bevorzugte Ausführungsformen der Erfindung werden im Folgenden anhand von Ausführungsbeispielen erläutert, die sich der Ausstattung von kommerziellen konfokalen Fluoreszenzmikroskopen mit Flourescence Lifetime Imaging Microscopy (FLIM)-Option bedienen. Zur Durchführung des Verfahrens geeignet sind beispielsweise Fluoreszenzmikroskope mit Einzelmolekülempfindlichkeit, wie sie unter der Bezeichnung "MicroTime® 200" von der Firma PicoQuant GmbH, Berlin hergestellt und vertrieben werden. Das für die bildgebende Fluoreszenzmikroskopie eingerichtete konfokale Mikroskopsystem enthält Hardware und Software für eine zeitkorrelierte Einzelphotonenzählung (TCSPC) zur Datenaufnahme und hat weiterhin Einrichtungen zur Ermittlung des zeitlichen Abklingens der Fluoreszenzintensität nach Anregung der Fluoreszenz durch einen kurzen Laserpuls.

Anhand von Fig. 1 wird zunächst das Prinzip der Fluoreszenzlebensdauerbestimmung durch Einzelphotonenzählstatistiken näher erläutert. Bei diesem Verfahren wird eine fluoreszierende Probe P mit einem kurzen, im Idealfall deltaförmigen Laserpuls LP angeregt. Zeitgleich wird über einen Synchronisationspuls SP ein Startsignal START erzeugt, das eine Stoppuhr SW startet, die mittels eines Stoppulses STOP angehalten wird, sobald ein Fluoreszenzphoton auf dem Detektor eines Photomultipliers PM registriert wird. Diese Messung wird mehrfach wiederholt.

Nach Abschalten der Anregungsstrahlung, d.h. nach Empfang des Laserpulses, verweilen die angeregten Moleküle für eine gewisse Zeit (Lebenszeit) im angeregten Zustand und kehren dann in den Grundzustand zurück, wobei pro angeregtem Molekül maximal ein Fluoreszenzphoton emittiert wird. Die meisten angeregten Moleküle haben nur eine relativ kurze Lebenszeit im angeregten Zustand, bei anderen vergeht mehr Zeit, bis sie in den Grundzustand zurückfallen und ein Fluorenzphoton erzeugen. Da die meisten Moleküle nach Abschalten der Anregungsstrahlung nur eine relativ kurze Lebenszeit haben, ist die Fluoreszenzintensität unmittelbar nach Abschalten der Anregungsstrahlung am höchsten und wird dann kontinuierlich schwächer, da längerlebige Moleküle im angeregten Zustand seltener sind als kurzlebige. Das zeitliche Abklingen der Fluoreszenzintensität kann, ähnlich dem radioaktiven Zerfall, im einfachsten Fall durch eine monoexponentielle Abnahme der Fluoreszenzintensität beschrieben werden. Dabei kann an die experimentellen Daten eine als Referenz-Abklingfunktion dienende Exponentialfunktion gemäß

$$I(t) = I_0 \exp\left(\frac{-t}{\tau}\right) \tag{1}$$

angepasst werden. Praktisch wird die Referenz-Abklingfunktion zuvor mit einer zuvor aufgenommenen Instrumentenantwortfunktion (IRF) gefaltet. In der Beschreibung gemäß Gl. (1) repräsentiert die Zerfallskonstante $\tau$ denjenigen Zeitpunkt, an dem die Anfangsintensität $I_0$ auf den Wert 1/e abgefallen ist. Dieser Wert beschreibt somit die mittlere Zeit, die das Molekül im elektronisch angeregten Zustand verweilt, bis es ein Photon aussendet.

Die über die Zerfallskonstante $\tau$ ermittelbare Fluoreszenzlebenszeit ändert sich in der Regel z.B. mit den Ionenkonzentrationsverhältnissen in der Umgebung des angeregten Moleküls und kann somit als eine auf moleklarer Ebene wirkende Messsonde genutzt werden. Auch der lokale Brechungsindex, mögliche Energietransferpartner oder die Flexibilität der lokalen Umgebungsmatrix können starken Einfluss auf die Fluoreszenzlebenszeit haben.

Figuren 2A und 2B zeigen typische TCSPC-Histogramme von Photonen, die aus einem interessierenden Probenvolumen emittiert wurden. Die entsprechende Fluoreszenzlebensdauer kann aus einem solchen Histogramm bzw. aus den zugrundeliegenden Daten ermittelt werden, indem eine Exponentialfunktion, z.B. gemäß Gleichung (1), angepasst und daraus die Zerfallskontante $\tau$ bestimmt wird. Typische Lebensdauern liegen häufig im Bereich von wenigen Nanosekunden (ns). Jeweils unterhalb der Histogramme sind die Fehler RES der Anpassung (häufig als Residuals bezeichnet) dargestellt. Ein relativ geringes und über die Zeit relativ gleichmäßiges Fehlerniveau wie in Fig. 2A deutet auf eine relativ gute Anpassung hin. Hohe Werte der Residuals und/oder starke Schwankungen über die Zeit t, wie sie in Fig. 2B gezeigt sind, deuten darauf hin, dass sich der experimentell erfasste Fluoreszenzzerfall mit der gewählten Anpassungsfunktion nur schlecht beschreiben lässt.

In klassischen FLIM-Techniken wird auf Basis dieser Fluoreszenzlebensdauer-Daten beispielsweise ein Falschfarbenbild des beobachteten Probenbereichs erzeugt, indem der Fluoreszenzzerfall an jedem Bildpunkt aufgezeichnet und für die jeweiligen Bildpunkte die Lebensdauer bestimmt und als Falschfarbe dargestellt wird. Als Ergebnis erhält man dadurch ein Bild, welches jedem Bildpunkt eine individuelle Zeitkonstante zuweist. Solche Verfahren stoßen jedoch an ihre Grenzen, sobald das Hintergrundsignal zu dominant wird und insbesondere mit einer ähnlichen Zeitkonstante abklingt wie das von der Fluoreszenzmarkierung herrührende Nutzsignal.

Im Folgenden wird nun eine Verfahrensvariante beschrieben, die es erlaubt, effektiv zwischen Nutzsignalen und Hintergrundsignalen zu diskriminieren. Hierbei wird ausgenutzt, dass ein Fluoreszenzmarkerfarbstoff typischerweise nur eine einzige Zeitkonstante des Fluoreszenzzerfalls aufweist, so dass die Abnahme der Fluoreszenzintensität mit der Zeit demnach im Wesentlichen einem einfachen exponentiellen Zusammenhang gehorcht. Diese Annahme gilt insbesondere, wenn sehr kleine Probenvolumina untersucht werden, wie es z.B. bei der optischen Abbildung eines konfokalen Mikroskops der Fall ist. Im Gegensatz dazu sind Hintergrundsignale in der Regel äußerst unspezifisch, da eine Vielzahl von möglichen Emittern zu dem gemessenen Intensitätsabfall beitragen kann. Da jeder unterschiedliche Emitter in der Regel eine eigene individuelle Zerfallskonstante aufweist, ist der für den Hintergrund gemessene Fluoreszenzzerfall in der Regel eine Superposition der Zerfallskurven vieler individueller Emitter und lässt sich daher nicht oder nur mit wesentlich größerem Fehler mit einer einfachen experimentellen Zerfallsfunktion beschreiben. Diese Zusammenhänge werden bei einer Verfahrensvariante ausgenutzt, um die dynamische Auflösung, d.h. den optischen Kontrast, des bildgebenden Verfahrens zu steigern.

Bei dieser Verfahrensvariante wird an jedem interessierenden Bildpunkt ein Fluoreszenzzerfall aufgezeichnet, also eine zeitauflösende Erfassung der Fluoreszenzintensität nach Abschalten einer Anregungsstrahlung durchgeführt, um das zeitliche Abklingen der Fluoreszenzintensität (d.h. den Fluoreszenzzerfall) zu ermitteln. Dieser wird normalerweise durch eine Abklingfunktion ähnlich der in Fig. 2 gezeigten für jeden interessierenden Bildpunkt beschrieben. Außerdem wird die Fluoreszenzintensität für alle interessierenden Bildpunkte ortsauflösend erfasst, um daraus den Bildpunkten zugeordnete Fluoreszenzintensitätssignale zu ermitteln. Die Fluoreszenzintensität kann dabei durch zeitliche Integration derjenigen Daten ermittelt werden, die bei der zeitauflösenden Erfassung des Fluoreszenzzerfalls ermittelt werden.

Dann wird ein Vergleich der den Bildpunkten zugeordneten Abklingfunktionen mit mindestens einer Referenz-Abklingfunktion zur Ermittlung eines Fehlerwertes für jeden der Bildpunkte durchgeführt. Im hier beschriebenen Ausführungsbeispiel repräsentiert die Referenz-Abklingfunktion eine Monoexponentialfunktion gemäß Gleichung (1). Der einem Bildpunkt zugeordnete Fehlerwert ist dabei ein Maß für eine Abweichung der dem Bildpunkt zugeordneten Abklingfunktion von der Referenz-Abklingfunktion. Bei dem Ausführungsbeispiel kann die Qualität der Anpassung z.B. durch das Fehlerquadrat $\chi^2$ quantifiziert werden. Je mehr nun das Nutzsignal zu den gemessenen Intensitätszerfall beigetragen hat, je höher also der Anteil des Nutzsignals angemessenen Gesamtsignal ist, desto besser wird sich die Messkurve mit einer monoexponentiellen Funktion beschreiben lassen und desto kleiner ist konsequenter Weise der Wert des Fehlerquadrats. Trägt umgekehrt im Wesentlichen das Hintergrundsignal zum gemessenen Intensitätssignal bei, so erreicht der Fehlerwert relativ große Werte. Dieser Zusammenhang ist schematisch in Fig. 3 dargestellt.

Fig. 3 zeigt idealisierte Fluoreszenzzerfallkurven für unterschiedliche Verhältnisse des Nutzsignals zum Hintergrundsignal. In den drei Diagrammen ist jeweils der Logarithmus der Fluoreszenzintensität I über der Zeit t aufgetragen. Von links nach rechts, d.h. von Fig. 3A zu Fig. 3C, sinkt der Anteil des von einem Fluoreszenzmarker (GFP) stammenden Nutzsignals. Bei einem relativ hohen Anteil (Fig. 3A) ergibt sich dann ein weitgehend linearer Zusammenhang zwischen dem Logarithmus der Fluoreszenzintensität und der Zeit, entsprechend einem monoexponentiellen Zerfall. Der entsprechende Fehlerwert Err bei einer Anpassung einer monoexponentiellen Referenz-Funktion REF ist dementsprechend gering. Je geringer der Anteil der vom Fluoreszenzmarker stammenden Intensität (Nutzsignal) am Gesamtsignal wird, desto schlechter wird die Anpassung der Monoexponentialfunktion an die Messwerte, was sich in den Diagrammen an zunehmend starken Abweichungen des Zusammenhangs von einem linearen Zusammenhang (gestrichelt gezeigte Referenz-Abklingfunktion REF) zeigt. Dementsprechend steigt der Fehlerwert Err der Anpassung, je höher der Anteil des Hintergrundsignals relativ zum Nutzsignal am Gesamtsignal wird. Je mehr Hintergrund zum gemessenen Signal beiträgt, desto stärker weicht also das Zerfallsprofil von einem monoexponentiellen Verhalten ab und desto größer ist demnach der Fehlerwert bei einfach-exponentieller Anpassung.

Bei der Bildgebung werden nun die zu den Bildpunkten gehörigen Fehlerwerte genutzt, indem für jeden Bildpunkt die Fluoreszenzintensitätssignale mit den zu dem Bildpunkt gehörenden Fehlerwert gewichtet werden. Ein wesentlicher Aspekt dieser Verfahrensvariante besteht somit darin, dass nicht die Fluoreszenzlebensdauer $\tau$ bestimmt und zur Bildgebung herangezogen wird, sondern dass die Qualität der Anpassung, parametrisiert durch einen geeigneten Fehlerwert, als Wertungsparameter eingesetzt und bei der Bildgebung berücksichtigt wird. Hierbei wird berücksichtigt, dass ein Fluoreszenzzerfall nur dann einer einfachen Exponentialfunktion gehorcht, wenn genau eine fluoreszierende Spezies (in homogener Umgebung) mit einer einzigen Zerfallskonstante zum Zerfall beiträgt. Während dies bei einer gezielten Fluoreszenzmarkierung in hohem Maße der Fall ist, wird diese Bedingung im Bereich von starker Hintergrundautofluoreszenz nicht erfüllt. Hier tragen nämlich viele unterschiedliche Emitter mit jeweils individuellen Zerfallskonstanten zum gemessenen Signal bei, so dass der resultierende Fluoreszenzzerfall in der Regel ausgeprägt multiexponentiell ist.

Die hier beschriebene Verfahrensvariante benutzt den Wert des Fehlerquadrats $\chi^2$, also ein Maß für die Abweichung der angepassten Funktion von den experimentellen Werten, zur Bestimmung der Qualität der Anpassung, d.h. zur Bestimmung des für jeden Bildpunkt gültigen Fehlerwertes. Je größer der $\chi^2$ Wert ist, desto stärker weicht der gemessene Zerfall von einem monoexponentiellen Verhalten ab, und desto mehr Hintergrundsignal wurde dementsprechend aufgezeichnet. Man hat also durch den Fehlerwert ein quantitatives Maß, um den Anteil von Nutzsignal bzw. Hintergrundsignal zu bestimmen.

Bei der hier beschriebenen Verfahrensvariante wird für jeden Bildpunkt der gemessene Wert der Fluoreszenzintensität mit dem Reziprokwert des ermittelten Fehlerquadrats, d.h. mit $1/\chi^2$ multipliziert. Auf diese Weise wird Hintergrundsignal (hoher $\chi^2$-Wert) weniger stark gewichtet, während Nutzsignal (kleiner $\chi^2$-Wert) überhöht wird. Die hierdurch mögliche Kontraststeigerung bildgebender Verfahren wird im Folgenden anhand der Fig. 4 und 5 näher erläutert.

Das Verfahren wurde an Arabidopsis Pflanzenzellen getestet, die mit dem grün fluoreszierenden Protein GFP markiert wurden. Diese Art von Proben stellt für die Fluoreszenzmikroskopie eine besondere Herausforderung dar, da Arabidopsis zum einen ein sehr hohes Hintergrundsignal aufweist und da dieses außerdem noch spektral sehr stark mit dem Abstrahlspektrum der GFP-Markierung überlappt, wodurch eine spektrale Unterscheidung zwischen Fluoreszenzmarkierung und Hintergrundsignal nicht oder kaum möglich ist. Außerdem liegen die Zerfallskonstanten von Zellhintergrund und GFP-Markierung in einem sehr ähnlichen Bereich (zwischen 3 ns und 4 ns), so dass eine Diskriminierung mit klassischen Fluoreszenzlebensdauer-Mikroskopieverfahren kaum möglich ist.

Fig. 4A zeigt ein konventionell ermitteltes Fluoreszenzintensitätsbild von Arabidopsis-Zellen, deren Zellmembranen selektiv mit GFP fluoreszenzmarkiert wurden. Intensitätsprofilmessungen wurden in dem rechts mit weißem Strich markierten Bereich durchgeführt, in welchem zwei durch eine Zellwand getrennte Zellmembranen liegen.

Fig. 4B zeigt ein Fluoreszenzintensitätsprofil entlang der weißen Linie in Fig. 4A (schwarze Punkte). Die Fluoreszenzintensität I ist in willkürlichen Einheiten angegeben. Das Intensitätsprofil zeigt ein einzelnes Maximum, die beiden von der nicht markierten Zellwand getrennten Zellmembranen können also nicht getrennt aufgelöst werden. Ein wesentlicher Grund hierfür liegt in dem hohen Fluoreszenzhintergrundsignal in der nicht markierten Zellwand, welches eine gezielte Beobachtung der Zellmembranen verhindert.

In Fig. 4B sind außerdem die Werte für die den Bildpunkten zugeordneten Fehlerwerte Err (linke Skala) in Form von Querbalken gezeigt. Aus der Breite der Querbalken, die sich häufig über mehrere Messpositionen, d.h. über mehrere nebeneinander liegende Bildpunkte erstrecken, ist ersichtlich, dass in größeren zusammenhängenden Bereichen das gleiche Fehlerwertniveau herrscht. Dennoch ist jedem Intensitätswert ein bestimmter Fehlerwert eindeutig zugeordnet. Das Fehlerwertniveau ist im Bereich des Intensitätsmaximums bei ca. 33.5 $\mu$m am größten (schlechte Anpassung einer monoexponentiellen Abklingkurve), hat ein lokales Minimum bei ca. 34.3 $\mu$m und ein kleines lokales Maximum bei ca. 34.7 $\mu$m.

Fig. 4C zeigt zum Vergleich mit Fig. 4B das zerfallsformgewichtete Intensitätsprofil aus Fig. 4B. Bei der Zerfallsformgewichtung wurden die zeitlichen Abklingkurven der Fluoreszenzintensität der einzelnen Bildpunkte mit einer monoexponentiellen Referenz-Abklingfunktion verglichen. Für jeden Bildpunkt wurde daraus ein Wert des Fehlerquadrats $\chi^2$ ermittelt, das ein Maß für die Abweichung der angepassten Funktion von den experimentellen Werten bildet, um die Qualität der Anpassung für jeden Bildpunkt zu ermitteln. Die grauen Balken in Fig. 4B geben die Fehlerwerte Err an. Hieraus wurden Gewichtungsfaktoren berechnet, die jeweils dem Reziprokwert des ermittelten Fehlerquadrats entsprachen. Die gemessenen Intensitätswerte wurden dann mit den Gewichtungsfaktoren multipliziert, um die in Fig. 4C gezeigten gewichteten Intensitätswerte I' zu erhalten.

Durch die Anwendung dieses Verfahrens wird der Hintergrund der Fluoreszenz der Zellwand effektiv unterdrückt, so dass die beiden mit GFP markierten Zellmembranen nun getrennt aufgelöst werden können. In Fig. 4C liegen die beiden Zellmembranen beidseitig zum lokalen Minimum des zerfallsformgewichteten Intensitätsprofils I' bei ca. 33,8 $\mu$m. Die Position des lokalen Minimums entspricht der Lage der Zellwand, während die beidseits daneben existierenden lokalen Maxima die selektiv markierten Zellmembranen mit relativ großem Markeranteil repräsentieren.

Fig. 4C zeigt anschaulich, dass das verwendete Messsystem ein ausreichendes räumliches Auflösungsvermögen hat, um nahe beieinander liegende Zellmembranen getrennt darzustellen. Jedoch wird dieses gute räumliche Auflösungsvermögen mit konventionellen Verfahren (vergleiche Fig. 4B) nicht voll ausgenutzt, da die dynamische Auflösung, d.h. der optische Kontrast, nicht ausreichend ist. Dieser Nachteil wird bei der hier vorgeschlagenen Verfahrensvariante mit zerfallsformgewichteten Intensitätsprofilen beseitigt.

Anhand der Fig. 5A bis D wird verdeutlicht, wie sich dieses Kontraststeigerungsverfahren auf die bildliche Darstellung auswirken kann. Fig. 5A und 5B zeigen jeweils Fluoreszenzintensitätsbilder von GFP-markierten Zellmembranen getrennt durch eine Zellwand, wobei in Fig. 5A die Bilderzeugung ohne Kontrastkorrektur und in Fig. 5B die Bilderzeugung mit Kontrastkorrektur über zerfallsformgewichtete Intensitätsprofile gezeigt ist.

Fig. 5D zeigt die zugehörigen Intensitätsprofile entlang der Profillinien in Fig. 5A und 5B. Die offenen Punkte zeigen jeweils die Rohdaten der unkorrigierten Intensitäten I aus Fig. 5A, während die schwarzen Punkte die gewichteten Intensitäten I' nach der Zerfallsformgewichtung zeigen.

Während die höchste Intensität im nicht korrigierten Bild (Fig. 5A) im Bereich der (nicht markierten) Zellwand auftritt, erkennt man im korrigierten Bild (Fig. 5B) zwei getrennte Maxima, die von der Fluoreszenz der markierten Zellmembranen stammen. Die Autofluoreszenz konnte im Beispielsfall etwa um einen Faktor 3 unterdrückt werden, so dass auch in der bildlichen Darstellung (Fig. 5B) die heller erscheinenden Membranen deutlich von der dazwischenliegenden, dunkler erscheinenden, nicht markierten Zellwand unterschieden werden können.

Figur 5D zeigt einen Ausschnitt eines Bildes, das allein auf Basis der ermittelten Fehlerwerte Err erzeugt wurde, also ein Fehlerwertbild. Der dunkle, von links unten nach rechts oben verlaufende Querstreifen repräsentiert dabei die Bereiche besonders großer Fehlerwerte, also eines relativ großen Hintergrundsignals, welches aus dem Bereich der nicht markierten Zellmembran stammt. Bei der Bilderzeugung wurden keinerlei Intensitätsinformationen verarbeitet, das Bild stellt ausschließlich das Verhältnis von Nutzsignalemission zu Hintergrundemission dar.

Die Erfindung wurde überwiegend anhand von Untersuchungen an biologischen Proben erläutert. Die Erfindung ist jedoch hierauf nicht beschränkt, sondern kann auch für andere Proben verwendet werden, z.B. Proben, die Autofluoreszenz von Polymermatrizen zeigen. Das Verfahren bietet die Möglichkeit, Proben ggf. mit Einzelmolekülsensitivität zu untersuchen und kann die Sensitivität konventioneller Verfahren steigern. Das Verfahren ist jedoch auch für Untersuchungen von Ensembles anwendbar.

**Patentansprüche**

1. Verfahren zur Charakterisierung einer Probe (P) mittels bildgebender Fluoreszenzmikroskopie mit folgenden Schritten:

   zeitauflösende Erfassung der Fluoreszenzintensität nach Abschalten einer Anregungsstrahlung zur Ermittlung einer das zeitliche Abklingen der Fluoreszenzintensität repräsentierenden Abklingfunktion für eine Vielzahl von Bildpunkten;
   Vergleichen der den Bildpunkten zugeordneten Abklingfunktionen mit mindestens einer Referenz-Abklingfunktion (REF) zur Ermittlung eines Fehlerwertes (Err) für einen oder mehrere Bildpunkte, wobei der einem Bildpunkt zugeordnete Fehlerwert ein Maß für eine Abweichung der dem Bildpunkt zugeordneten Abklingfunktion von der Referenz-Abklingfunktion ist;
   Erzeugen eines Bildes der Probe unter Verwendung der Fehlerwerte (Err), **dadurch gekennzeichnet, dass** ein Bild der Probe unter Verwendung der Fehlerwerte dadurch erzeugt wird, dass für jeden Bildpunkt ermittelte Werte für die Fluoreszenzintensität mit dem Reziprokwert des ermittelten zugeordneten Fehlerwertes (Err) oder mit einem hierzu proportionalen Wert multipliziert werden.

2. Verfahren nach Anspruch 1, worin eine Referenz-Abklingfunktion (REF) eine monoexponentielle Abklingfunktion ist.

3. Verfahren nach Anspruch 1 oder 2, worin eine Referenz-Abklingfunktion (REF) eine multiexponentielle Abklingfunktion ist, insbesondere eine biexponentielle Abklingfunktion.

4. Verfahren nach einem der vorhergehenden Ansprüche, worin beim Vergleichen der den Bildpunkten zugeordneten Abklingfunktionen mit einer Referenz-Abklingfunktion für jeden Bildpunkt der Wert des Fehlerquadrats $\chi^2$ bestimmt wird.

5. Verfahren nach einem der vorhergehenden Ansprüche, worin das Verfahren eine zeitkorrelierte Einzelphotonenzählung (TCSPC) zur Erfassung der Abklingfunktion umfasst.

6. Verfahren nach einem der vorhergehenden Ansprüche, worin zum Erfassen von Fluoreszenzsignalen ein konfokales Mikroskopsystem verwendet wird.

7. System zur Charakterisierung einer Probe (P) mittels bildgebender Fluoreszenzmikroskopie mit:

   einer Einrichtung zur zeitauflösenden Erfassung der Fluoreszenzintensität nach Abschalten einer Anregungsstrahlung zur Ermittlung einer das zeitliche Abklingen der Fluoreszenzintensität repräsentierenden Abklingfunktion für eine Vielzahl von Bildpunkten;
   einer Einrichtung zum Vergleichen der den Bildpunkten zugeordneten Abklingfunktionen mit mindestens einer Referenz-Abklingfunktion (REF) zur Ermittlung eines Fehlerwertes (Err) für einen oder mehrere Bildpunkte, wobei der einem Bildpunkt zugeordnete Fehlerwert ein Maß für eine Abweichung der dem Bildpunkt zugeordneten Abklingfunktion von der Referenz-Abklingfunktion ist; und
   einer Einrichtung zum Erzeugen eines Bildes der Probe unter Verwendung der Fehlerwerte, **dadurch gekennzeichnet, dass**
   die Einrichtung so konfiguriert ist, dass ein Bild der Probe unter Verwendung der Fehlerwerte dadurch erzeugt wird, dass für jeden Bildpunkt ermittelte Werte für die Fluoreszenzintensität mit dem Reziprokwert des ermittelten Fehlerwertes oder mit einem hierzu proportionalen Wert multipliziert werden.

8. System nach Anspruch 7, das zur Durchführung des Verfahrens nach einem der Ansprüche 1 bis 6 konfiguriert ist.

9. System nach Anspruch 7 oder 8, worin das System ein konfokales Mikroskopsystem umfasst.

10. Computerprogrammprodukt, welches insbesondere auf einem computerlesbaren Medium gespeichert oder als Signal verwirklicht ist, wobei das Computerprogrammprodukt, wenn es in den Speicher eines geeigneten Computers geladen und von einem Computer ausgeführt ist bewirkt, dass der Computer ein Verfahren gemäß einem der Ansprüche 1 bis 6 durchführt.

**Claims**

1. A method for characterizing a sample (P) by means of imaging fluorescence microscopy, comprising the following steps:

   time-resolved detecting the fluorescence intensity after switching off excitation radiation in order to establish a decay function, representing the decay of the fluorescence intensity over time, for a multiplicity of pixels, comparing the decay functions associated with the pixels to at least one reference decay function (REF) in order to establish an error value (Err) for one or more pixels, the error value associated with a pixel being a measure for a deviation of the decay function associated with the pixel from the reference decay function, generating an image of the sample using the error values (Err),
   **characterized in that**
   an image of the sample using the error value is generated by virtue of the fact that the values for the fluorescence intensity established for each pixel are multiplied by the reciprocal value of the established associated error value (Err) or a value proportional thereto.

2. The method according to claim 1, wherein a reference decay function (REF) is a mono-exponential decay function.

3. The method according to claim 1 or 2, wherein a reference decay function (REF) is a multi-exponential decay function, more particularly a bi-exponential decay function.

4. The method according to any one of the preceding claims, wherein the error squared $\chi^2$ value is determined for each pixel when comparing the decay functions associated with the pixels to a reference decay function.

5. The method according to any one of the preceding claims, wherein the method comprises time-correlated single-photon counting (TCSPC) for detecting the decay function.

6. The method according to any one of the preceding claims, wherein a confocal microscope system is used to detect fluorescence signals.

7. A system for characterizing a sample (P) by means of imaging fluorescence microscopy, comprising:

   an apparatus for time-resolved detecting the fluorescence intensity after switching off excitation radiation in order to establish a decay function, representing the decay of the fluorescence intensity over time, for a multiplicity of pixels,
   an apparatus for comparing the decay functions associated with the pixels to at least one reference decay function (REF) in order to establish an error value (Err) for one or more pixels, the error value associated with a pixel being a measure for a deviation of the decay function associated with the pixel from the reference decay function; and
   an apparatus for generating an image of the sample using the error values,
   **characterized in that**
   the apparatus is configured for generating an image of the sample using the error values **in that** values for the fluorescence intensity established for each pixel are multiplied by the reciprocal value of the established error value or a value proportional thereto.

8. The system according to claim 7, which is configured to carry out the method according to any one of claims 1 to 6.

9. The system according to claim 7 or 8, wherein the system comprises a confocal microscope system.

10. A computer program product, which more particularly is stored on a computer-readable medium or implemented as a signal, wherein the computer program product causes the computer to execute a method according to any one of claims 1 to 6 when said computer program product is loaded into the memory of a suitable computer and executed by a computer.

**Revendications**

1. Procédé de caractérisation d'un échantillon (P) par microscopie à fluorescence pour imagerie comprenant les étapes consistant à :

détecter de manière résolue dans le temps l'intensité de fluorescence après désactivation d'un rayonnement d'excitation afin de déterminer une fonction d'affaiblissement représentant l'affaiblissement temporel de l'intensité de fluorescence pour une pluralité de points d'image ;

comparer les fonctions d'affaiblissement associées aux points d'image à au moins une fonction d'affaiblissement de référence (REF) afin d'obtenir une valeur d'erreur (Err) pour un ou plusieurs points d'image, dans lequel la valeur d'erreur associée à un point d'image est une mesure d'un écart de la fonction d'affaiblissement associée au point d'image par rapport à la fonction d'affaiblissement de référence ;

générer une image de l'échantillon en utilisant les valeurs d'erreur (Err), **caractérisé en ce que**

une image de l'échantillon est générée par utilisation des valeurs d'erreur en faisant en sorte que, pour chaque point d'image, des valeurs déterminées pour l'intensité de fluorescence soient multipliées par la valeur inverse de la valeur d'erreur associée déterminée (Err) ou par une valeur proportionnelle à celle-ci.

2. Procédé selon la revendication 1, dans lequel une fonction d'affaiblissement de référence (REF) est une fonction d'affaiblissement mono-exponentielle.

3. Procédé selon la revendication 1 ou 2, dans lequel une fonction d'affaiblissement de référence (REF) est une fonction d'affaiblissement multi-exponentielle, notamment une fonction d'affaiblissement bi-exponentielle.

4. Procédé selon l'une quelconque des revendications précédentes, dans lequel, lors de la comparaison des fonctions d'affaiblissement associées aux points d'image à une fonction d'affaiblissement de référence pour chaque point d'image, la valeur de l'erreur quadratique $\chi^2$ est déterminée.

5. Procédé selon l'une quelconque des revendications précédentes, dans lequel le procédé comprend un comptage de photons individuels corrélés dans le temps (TCSPC) pour détecter la fonction d'affaiblissement.

6. Procédé selon l'une quelconque des revendications précédentes, dans lequel un système de microscope confocal est utilisé pour détecter des signaux de fluorescence.

7. Système de caractérisation d'un échantillon (P) par microscopie à fluorescence pour imagerie comportant:

un dispositif destiné à détecter de manière résolue dans le temps l'intensité de fluorescence après désactivation d'un rayonnement d'excitation afin de déterminer une fonction d'affaiblissement représentant l'affaiblissement temporel de l'intensité de fluorescence pour une pluralité de points d'image ;

un dispositif destiné à comparer les fonctions d'affaiblissement associées aux points d'image à au moins une fonction d'affaiblissement de référence (REF) afin de déterminer une valeur d'erreur (Err) pour un ou plusieurs points d'images, dans lequel la valeur d'erreur associée à un point d'image est une mesure d'un écart de la fonction d'affaiblissement associée au point d'image par rapport à la fonction d'affaiblissement de référence; et

un dispositif destiné à générer une image de l'échantillon en utilisant les valeurs d'erreur, **caractérisé en ce que** le dispositif est configuré de manière à ce qu'une image de l'échantillon soit générée par utilisation des valeurs d'erreur en faisant en sorte que, pour chaque point d'image, des valeurs déterminées pour l'intensité de fluorescence soient multipliées par la valeur inverse de la valeur d'erreur déterminée ou par une valeur proportionnelle à celle-ci.

8. Système selon la revendication 7, qui est configuré pour mettre en oeuvre le procédé selon l'une quelconque des revendications 1 à 6.

9. Système selon la revendication 7 ou 8, dans lequel le système comprend un système de microscope confocal.

10. Produit de programme informatique qui notamment est stocké sur un support lisible par ordinateur ou qui est mis en oeuvre sous la forme d'un signal, dans lequel le produit de programme informatique, lorsqu'il est chargé dans une mémoire d'un ordinateur approprié et est exécuté par un ordinateur, fait en sorte que l'ordinateur mette en oeuvre un procédé selon l'une quelconque des revendications 1 à 6.

Fig. 1

Fig. 2A

Fig. 2B

Fig. 2

GFP

Err

Fig. 3

Fig. 4A

Fig. 4B

Fig. 4C

Fig. 4

Fig. 5D

Fig. 5A

Fig. 5B

Fig. 5C

Position

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2006069444 A1

**In der Beschreibung aufgeführte Nicht-Patentliteratur**

- **FACHARTIKEL ; VON BREUSEGEM, S. ; M. LEVI ; M. BARRY.** Fluorescence Correlation Specroscopy and Fluorescence Lifetime Imaging Microscopy. *Review. Nephron Exp Nephrol.,* 2006, vol. 103 (2), e41-e49
- **VON A. BÜLTER ; B. KRÄMER ; F. KOBERLING ; A. TANNERT ; T. KORTE ; A. HERMANN.** Fluorescence Lifetime Imaging (FLIM) zur Analyse der lokalen Lipid-Umgebung. *BIOspektrum,* Marz 2005, 351-353
- **A. BEDNARKIEWICZ ; M. P. WHELAN.** Global analysis of microscopic fluorescence lifetime images using spectral segmentation and a digital micromirror spatial illuminator. *Journal of Biomedical Optics,* Juli 2008, vol. 13 (4), 041316-1, 041316-13
- Fluoresence Lifetime Imaging Microscopy (FLIM) Data Analysis with TIMP. **S. LAPTENOK et al.** Journal of Statistical Software. Januar 2007, vol. 18, 1-20
- **D. S. ELSON et al.** Miniaturized side-viewing imaging probe for fluorescence lifetime imaging (FLIM): validation with fluorescence dyes, tissue structural proteins and tissue specimens. *New Journal of Physics,* 2007, vol. 9 (127), 1-11